# EUROPÄISCHE PATENTSCHRIFT

(11) **EP 1 107 885 B1**
(45) Veröffentlichungstag und Bekanntmachung des Hinweises auf die Patenterteilung: **13.08.2003**
(21) Anmeldenummer: 99944484.7
(22) Anmeldetag: 23.08.1999
(51) Int. Cl.: B60R 21/20

(54) **AIRBAGABDECKUNG MIT DEKORSCHICHT**
AIR BAG COVERING WITH DECORATIVE LAYER
COUVERCLE D'AIRBAG AVEC COUCHE DECORATIVE

(30) Priorität: 25.08.1998 DE 19838603
(43) Veröffentlichungstag der Anmeldung: 20.06.2001
(73) Patentinhaber: ELDRA KUNSTSTOFFTECHNIK GMBH, D-84137 Vilsbiburg (DE)
(72) Erfinder: ANGLSPERGER, Erwin, F., D-84307 Eggenfelden (DE)
(74) Vertreter: Stein-Dräger, Christiane
(86) Internationale Anmeldenummer: EP9906181
(87) Internationale Veröffentlichungsnummer: WO00010840

(56) Entgegenhaltungen:
- EP-A- 0 428 935
- EP-A- 0 770 522
- DE-C- 19 617 758
- GB-A- 2 252 274
- US-A- 3 794 349

## Beschreibung

Die Erfindung betrifft eine Airbagabdeckung, die ein Sollbruchlinien aufweisendes Formteil und eine auf dem Formteil aufgebrachte Dekorschicht umfaßt, beispielsweise für den Einsatz in einem Kraftfahrzeug.

Ein Formteil wird im folgenden als ein die Airbagbetriebseinrichtung sowie das Airbagaufprallpolster schützendes bzw. abdeckendes Bauteil definiert, das Sollbruchlinien oder Sollbruchstellen aufweist, die bei Auslösung des Airbags durch das Aufprallpolster aufbrechbar sind und ein Austreten des Aufprallpolsters gewährleisten.

Derartige Airbagsysteme sind in Kraftfahrzeugen hinlänglich bekannt. Vor allem für Fahrer und Beifahrer sind im Lenkrad bzw. im Armaturenbrett eingebaute Airbags, die das Verletzungsrisiko bei einem Frontalaufprall verringern, weit verbreitet. Auch in den Türen, den Türholmen oder den Sitzen eingebaute Airbagsysteme, die Fahrer und Beifahrer vor Verletzungen bei einem Seitenaufprall schützen, sind inzwischen weit verbreitet. Es werden auch Airbagsysteme in die Rückseite der Vordersitze eingebaut, so daß auch Passagiere im Fond durch Airbagsysteme geschützt werden können.

### STAND DER TECHNIK

Formteile für Airbagabdeckungen werden häufig als Spritzgußteile aus Kunststoff hergestellt. Weitere bekannte Herstellverfahren sind beispielsweise das Schäumen von Kunststofformteilen oder das Umschäumen von Metallteilen. Um eine einwandfreie Funktion der Airbagsysteme zu gewährleisten, sind diese Formteile mit Sollbruchlinien oder -stellen versehen, die bei einer vorbestimmten Reißkraft aufreißen und ein einwandfreies Austreten des darunter befindlichen Airbags gewährleisten. Zur Aufwertung von Optik und Haptik oder um Airbagabdeckungen dem Fahrzeuginnenraum anzupassen, werden die Formteile häufig lackiert oder mit einer Dekorschicht versehen. Derartige Dekorschichten bestehen je nach Fahrzeuginnenausstattung aus echtem Leder, aus Austauschwerkstoffen für Leder, wie beispielsweise Alcantara oder Kunstleder, oder aus Kunststoffolien.

Die Sollbruchlinien teilen das Formteil der Airbagabdeckung meist in einen oder mehrere Bereiche ab, die beim Aufblasen des Luftsacks im Airbagmodul nach dem Aufreißen der Sollbruchlinie eine oder mehrere Klappen bilden, die sich öffnen und zur Seite verschwenken, um den Luftsack zu entfalten und mit dem vom Gasgenerator zur Verfügung gestellten Gas füllen zu können.

Gemäß dem Stand der Technik werden Dekorschichten aus Leder aus mehrteiligen Abschnitten gefertigt, die im Bereich der Sollbruchlinien des Formteils zusammengenäht werden. Abhängig von der Sollreißkraft werden die Stichlänge, die Stärke und das Material des Fadens so gewählt, daß bei einer definierten Reißkraft die Naht durchtrennt und das einwandfreie Austreten des Aufprallpolsters gewährleistet wird. Bei derartigen zusammengenähten Dekorschichten muß die Naht exakt über den Sollbruchlinien des Formteils positioniert werden, damit bei der Airbagauslösung das Austreten des Aufprallpolsters durch Reißen der Naht einwandfrei erfolgen kann. Das genaue Positionieren der zusammengenähten Lederdekorschicht auf dem Formteil ist äußerst schwierig, da sich beim Aufkaschieren oder Hinterschäumen die Dekorschicht verziehen kann, was optisch nachteilig ist und möglicherweise zum Ausschuß der bereits mit großem Arbeitsaufwand gefertigten Lederdekorschicht führen kann. Des weiteren ist z.B. bei einer Pralltopf-Airbagabdeckung in einem Lenkrad eine sehr komplizierte Form der Reißnaht notwendig, die nur sehr arbeitsaufwendig und teuer herzustellen ist.

In der europäischen Patentanmeldung 0 428 935 ist eine Airbagabdeckung offenbart, bei der ein die Airbagbetriebseinrichtung sowie das Airbagaufprallpolster abdeckendes Formteil, das Sollbruchlinien aufweist, die bei Auslösung des Airbags durch das Airbagaufprallpolster aufbrechbar sind und ein Austreten des Airbagaufprallpolsters gewährleisten, vorhanden sind. Das Formteil ist mit einer Dekorschicht aus einem Vinylkunststoff überdeckt, die im gesamten Bereich der Sollbruchlinien des Formteils durch Einschneiden oder Einkerben geschwächt ist. Das Einschneiden der Dekorschicht wird auf einer nachgebenden Unterlage durchgeführt. Dieser Stand der Technik ist mit dem Problem behaftet, daß das Einschneiden bis auf eine vorbestimmte definierte Reststärke der Dekorschicht schwierig auszuführen ist.

In der DE-OS 195 16 230 ist ein Verfahren beschrieben, in dem die Materialdicke der Dekorschicht entlang der Sollbruchlinien des Formteils reduziert wird, um dort ein leichteres Einreißen der Dekorschicht bei der Airbagauslösung zu gewährleisten. Hierfür wird die Dekorschicht auf eine mit Erhebungen ausgestattete Schablone aufgelegt und die Dekorschicht im Bereich der Erhebungen auf der der Schablone abgewandten Seite teilweise mittels einer Schneideinrichtung definiert abgetragen.

Bei den oben beschriebenen Verfahren werden zum Teil bewußt sichtbare Designnuten in die Formteile eingeformt, in die beim Aufkaschieren der Dekorschicht deren geschwächte Reißlinienbereiche bzw. Nähte hineingedrückt werden. Dadurch ist ein Ausgleich von gewissen Toleranzen bei der Verarbeitung der Dekorschicht gegeben, die beispielsweise bei Naturprodukten, wie Leder, nahezu unvermeidlich sind. Der Gestaltungsspielraum für derartige Airbagabdeckungen ist allerdings aufgrund der Designnuten, die entlang der Sollbruchlinien des Formteils und der Dekorschicht vorhanden sind, stark eingeschränkt. Als Folge davon müssen entweder Zugeständnisse an die Sichtbarkeit der Aufreißlinien auf der Abdeckkappenoberfläche oder an die geometrische Ausgestaltung der Klappen und der Abdeckkappenoberfläche gemacht werden. Die geschwächten Bereiche in der Dekorschicht erstreckten sich dabei bisher entlang der gesamten Sollbruchlinien des Formteils der Airbagabdeckung.

Aus der EP 0 770 522 A1 - die den Oberbegriff von Anspruch 1 bildet - ist eine Airbaganordnung bekannt, die eine Dekorschicht, eine Schaumschicht und einen Träger aufweist. Die Airbagabdeckung hat randseitige Kerben in der Dekorschicht sowie dem Träger, die eine Risseinleitung initiieren.

Die DE 196 17 758 C1 betrifft eine Abdeckung für ein Gassackmodul, in der eine Aussparung vorgesehen ist, in die eine durch den Gassack herausdrückbare Kappe von der Unterseite der Abdeckung her, d. h. der Sichtseite abgewandten Seite her, eingesetzt ist. Zur Vergrößerung der Austrittsöffnung für den Gassack sind zusätzlich Sollbruchlinien vorgesehen, die an der Aussparung beginnen und von dort in Richtung auf den Rand der Abdeckung zu verlaufen.

### DARSTELLUNG DER ERFINDUNG

Der Erfindung liegt das technische Problem zugrunde, eine Airbagabdeckung sowie eine entsprechende Dekorschicht für Airbagabdeckungen bereitzustellen, die einfach und preisgünstig herzustellen sind und gleichzeitig bei großem Gestaltungsfreiraum bezüglich des Designs der Oberfläche der Airbagabdeckung und, der Dekorschicht sowie der Klappengeometrie ein zügiges Durchtrennen der Dekorschicht und des darunterliegenden Formteils der Airbagabdeckung bei einer Airbagauslösung gewährleisten.

Dieses Problem wird durch eine Airbagabdeckung mit den Merkmalen des Anspruchs 1 gelöst.

Bei der Erfindung wird die Dekorschicht nicht entlang der gesamten Sollbruchlinien des Formteils, sondern lediglich in einem örtlich begrenzten Initialbereich geschwächt. In Untersuchungen wurde festgestellt, daß das Schwächen der Dekorschicht in einem Initialbereich bei einer Airbagauslösung zu einer Spannungsüberhöhung im Kerbgrund des Initialbereichs führt. Aufgrund dieser Spannungsüberhöhung erfolgt an dieser Stelle die Rißeinleitung zum Durchtrennen der Dekorschicht. Nach der Rißeinleitung schreitet der Riß weiter fort und durchtrennt die Dekorschicht vollständig, ohne daß die Dekorschicht außerhalb des Initialbereichs vorher geschwächt wurde.

Es ist somit möglich, die Dekorschicht zu durchtrennen, wobei nur ein örtlich begrenzter Bereich, der Initialbereich, so geschwächt wird, daß dort die Rißeinleitung erfolgt. Bei einer Airbagabdeckung wird eine derartige Dekorschicht auf ein Sollbruchlinien aufweisendes Formteil aufgebracht, wobei die Dekorschicht zumindest einen örtlich begrenzten Initialbereich umfaßt, bei dem bei einer Airbagauslösung die Rißeinleitung zum Durchtrennen der Dekorschicht entlang der Sollbruchlinien des Formteils erfolgt. Da erfindungsgemäß die Dekorschicht lediglich in einem örtlich begrenzten Initialbereich bearbeitet wird, so daß aufgrund von Kerbwirkung die Rißeinleitung in diesem exakt definierten, örtlich begrenzten Initialbereich erfolgen kann, entfällt die aufwendige Bearbeitung der Dekorschicht entlang der Sollbruchlinien des Formteils. Zusätzlich kann auf Designnuten verzichtet werden, die den Gestaltungsfreiraum in bezug auf das Design entsprechend reduzieren würden, da es nicht mehr notwendig ist, fertigungsbedingte Toleranzen der Dekorschicht durch die Designnuten auszugleichen. Durch die Spannungsüberhöhung im Kerbgrund des Initialbereichs erfolgt die Rißeinleitung zum Durchtrennen der Dekorschicht, wobei der Rißfortschritt entlang der Sollbruchlinien des Formteils erfolgt.

Es ist also bei einer Airbagauslösung gewährleistet, daß sowohl das Formteil als auch die darauf aufgebrachte Dekorschicht vollständig und zügig in einem definierten Bereich durchtrennt werden, so daß eine oder mehrere Klappen gebildet werden, die sich öffnen und zur Seite verschwenken, um den Luftsack zu entfalten und mit dem vom Gasgenerator zur Verfügung gestellten Gas füllen zu können.

Nach einer bevorzugten Ausführungsform wird der Initialbereich der Dekorschicht durch ein Vermindern der Dicke der Dekorschicht gebildet. Hierzu lassen sich verschiedene bekannte Verfahren verwenden, beispielsweise ein rückseitiges Einschneiden der Dekorschicht oder ein Schwächen der Dekorschicht mit dem in der DE-OS 195 16 230 beschriebenen Schablonen-Schärfspalten. Ein solches Vermindern der Dicke der Dekorschicht führt dazu, daß, wenn bei einer Airbagauslösung Kräfte auf die Dekorschicht einwirken, die Dekorschicht in diesem geschwächten Bereich aufgrund von Spannungsüberhöhung im Kerbgrund durchtrennt wird, so daß an dieser Stelle eine Rißeinleitung erfolgt. Sobald die Dekorschicht in diesem örtlich begrenzten Initialbereich eingerissen ist, schreitet der Riß entlang der aufbrechenden Sollbrüchlinien des Formteils fort.

Eine weitere Ausführungsform sieht vor, daß der örtlich begrenzte Initialbereich der Dekorschicht durch ein vollständiges Durchtrennen der Dekorschicht, beispielsweise durch einen Durchbruch, gebildet wird. Auch hier führen die auf die Dekorschicht einwirkenden Kräfte bei einer Airbagauslösung zu einer Spannungsüberhöhung im Kerbgrund, so daß in dem exakt definierten Initialbereich die Rißeinleitung erfolgt. Aufgrund des Durchtrennens der Sollbruchlinien des Formteils unter der Dekorschicht schreitet der Riß in der Dekorschicht entlang den Sollbruchlinien des Formteils fort. Vorzugsweise weist die Kontur des Initialbereichs der Dekorschicht spitz zulaufende Abschnitte auf, wodurch die Kerbwirkung des Initialbereichs verstärkt wird. Die Kontur des Initialbereiches kann beispielsweise rautenförmig sein oder kreisförmig mit linienförmigen Einschnitten. Es sind allerdings auch andere Geometrien zur Ausgestaltung des Initialbereichs für die Rißeinleitung denkbar.

Bei der Erfindung ist der Initialbereich der Dekorschicht unter einem an dem Formteil befestigten Sichteinsatzteil verdeckt angeordnet. Derartige Sichteinsatzteile sind häufig an Airbagabdeckungen angebracht und als Embleme oder Schriftzüge oder allgemein als Verzierungen ausgebildet. Diese Sichteinsatzteile enthalten häufig Kennzeichnungen der Automarke oder Hinweise auf den unter der Abdeckung verborgenen Airbag. Das Sichteinsatzteil kann gegebenenfalls auch zwei- oder mehrteilig ausgebildet sein. Ist der örtlich begrenzte Initialbereich, in dem bei einer Airbagauslösung die Rißeinleitung zum Durchtrennen der Dekorschicht erfolgt, unter einem an dem Formteil befestigten Sichteinsatzteil verborgen, kann der Initialbereich allein nach den für die Rißeinleitung relevanten Kriterien ausgestaltet werden, ohne auf das Design und die Optik Rücksicht nehmen zu müssen.

Vorzugsweise ist an dem Sichteinsatzteil ein Fangelement reißfest befestigt und mit einem Trägerteil verbindbar, um bei einer Auslösung des Airbags ein unkontrolliertes Loslösen des Sichteinsatzteils von dem Trägerteil zu verhindern. Auf diese Weise wird sichergestellt, daß das Sichteinsatzteil zwar einerseits wirkungsvoll den Initialbereich der Dekorschicht verdeckt, gleichzeitig allerdings das Verletzungsrisiko der Fahrzeuginsassen durch das Sichteinsatzteil nicht erhöht. Bei einer Airbagauslösung könnte das Sichteinsatzteil sonst als ganzes von seiner Befestigung abreißen und unkontrolliert in die Fahrgastzelle geschleudert werden, oder das Sichteinsatzteil könnte in mehrere teilweise scharfkantige Bruchstücke zerbersten, wodurch für die Fahrzeuginsassen ein erhöhtes Verletzungsrisiko bestünde. Durch die Sicherung des Sichteinsatzteils mit einem reißfesten Fangelement wird verhindert, daß das Sichteinsatzteil oder Bruchstücke des Sichteinsatzteils unkontrolliert von seiner Befestigung abgelöst werden; bei einer Airbagauslösung wird das Sichteinsatzteil nun durch das Fangelement festgehalten, so daß es nur ein definiertes Stück in den Fahrgastraum eindringen kann.

Bei der Erfindung weist das Formteil einen örtlich begrenzten Initialbereich auf, der örtlich mit dem Initialbereich der Dekorschicht zusammenfällt und in dem bei einer Airbagauslösung die Rißeinleitung zum Durchtrennen der Sollbruchlinien des Formteils erfolgt. Auf diese Weise kann die Rißeinleitung in dem Formteil und der Dekorschicht in einem gemeinsamen Initialbereich erfolgen, der erfindungsgemäß unter einem Sichteinsatzteil verdeckt angeordnet ist. Das Durchtrennen der Dekorschicht wird durch einen gemeinsamen Initialbereich von Formteil und Dekorschicht verbessert, da die Rißeinleitung von Dekorschicht und Formteil an ein und demselben Ort erfolgt und damit auch die Richtung des Rißfortschritts sowohl für das Formteil als auch für die Dekorschicht festgelegt ist. Falls der Ort der Rißeinleitung des Formteils nicht mit dem Initialbereich der Dekorschicht zusammenfällt, könnten sich daraus Probleme beim Durchtrennen von Dekorschicht und Formteil ergeben.

Der Initialbereich des Formteils ist als ein Durchbruch ausgebildet. Nach einer bevorzugten Ausführungsform ist der Durchbruch dabei so gestaltet, daß er beispielsweise für eine Clipbefestigung oder eine Nietbefestigung des Sichteinsatzteils genutzt werden kann. Das Sichteinsatzteil läßt sich allerdings auch durch Ultraschallschweißen, Kleben oder sonstige Verbindungsarten auf dem Formteil befestigen.

Vorzugsweise besteht die Dekorschicht aus Leder oder einem Lederaustauschmittel, wie Kunstleder, Alcantara, Lorica oder ähnlichem. Je nach Einsatzort und Ausgestaltung des jeweiligen Fahrzeuginnenraums kann die Dekorschicht allerdings auch aus einer Kunststoffolie, wie Polyurethan (PUR), Polyvinylchlorid (PVC), Acrylnitrilacrylester (ASA) oder Acrylnitrilbutadienstyrol (ABS) gefertigt werden.

Nach einer letzten bevorzugten Ausführungsform sind die Sollbruchlinien so angeordnet, daß bei einer Airbagauslösung mehrere sich öffnende Klappen gebildet werden. Vorzugsweise sind die Sollbruchlinien des Formteils H-förmig oder X-förmig ausgebildet, wodurch bei einer Airbagauslösung zwei bzw. vier sich öffnende Klappen entstehen, damit sich der Luftsack entfalten und mit dem vom Gasgenerator zur Verfügung gestellten Gas gefüllt werden kann. Im Falle einer H-förmigen Sollbruchlinie läßt sich das Sichteinsatzteil beispielsweise so anordnen, daß zumindest ein Teil der querverlaufenden Sollbruchlinie verdeckt wird. Bei einer X-förmigen Anordnung der Sollbruchlinien kann das Sichteinsatzteil beispielsweise in dem Kreuzungspunkt der Sollbruchlinien angeordnet werden.

### KURZE BESCHREIBUNG DER ZEICHNUNGEN

Im folgenden sind zur weiteren Erläuterung und zum besseren Verständnis mehrere Ausführungsbeispiele der Erfindung unter Bezugnahme auf die beigefügten Zeichnungen näher beschrieben und erläutert. Es zeigen:
- Fig. 1: eine erfindungsgemäße Airbagabdeckung;
- Fig. 2: einen Schnitt durch Fig. 1 entlang der Linie II-II;
- Fig. 3: einen Schnitt durch Fig. 1 entlang der Linie III-III;
- Fig. 4: eine erfindungsgemäße Airbagabdeckung mit einem Sichteinsatzteil und einem Fangelement;
- Fig. 5: eine weitere Ausführungsform einer Airbagabdeckung mit einem Sichteinsatzteil; und
- Fig. 6: geöffnete Klappen einer Airbagabdeckung nach einer Airbagauslösung.

### BESCHREIBUNG VON AUSFÜHRUNGSBEISPIELEN DER ERFINDUNG

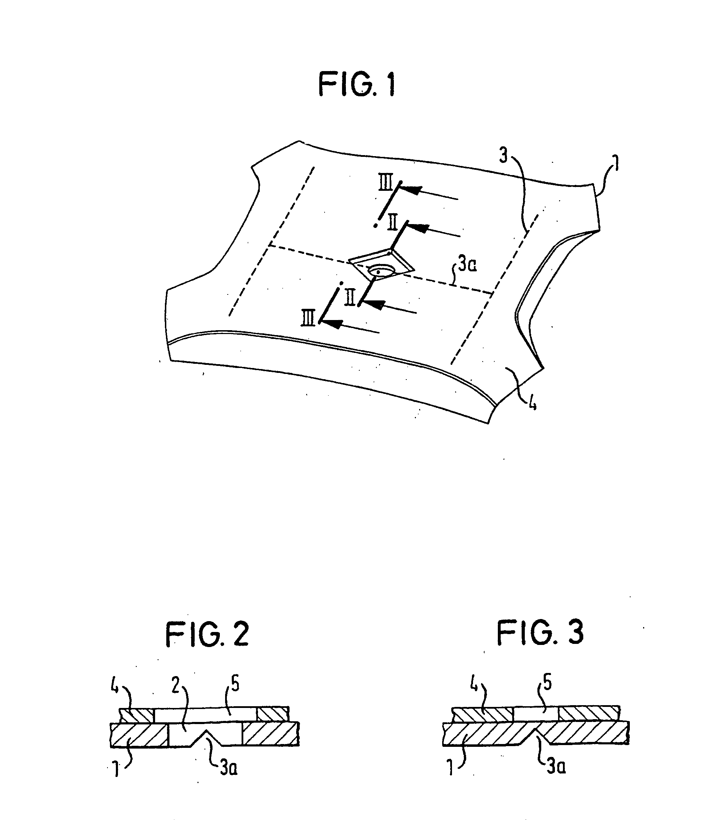

Fig. 1 zeigt eine erfindungsgemäße Airbagabdeckung, wie sie beispielsweise für ein im Lenkrad eingebautes Airbagsystem verwendet werden kann. Dabei ist der Einsatz der Airbagabdeckung vorzugsweise in Kraftfahrzeugen vorgesehen; derartige Airbagabdeckungen lassen sich aber auch in anderen Personentransportmitteln, wie Flugzeug, Eisenbahn oder Schiff, verwenden. Auf einem Formteil 1 ist eine Dekorschicht 4 aufgebracht, wobei das Formteil 1 Sollbruchlinien 3, 3a aufweist. Erfindungsgemäß umfaßt die Dekorschicht 4 einen Initialbereich 5, der örtlich begrenzt ist, und in dem bei einer Airbagauslösung die Rißeinleitung zum Durchtrennen der Dekorschicht 4 erfolgt. In dem in Fig. 1 gezeigten Ausführungsbeispiel ist die Dekorschicht 4 im Initialbereich 5 vollständig durchtrennt, wobei der Durchbruch so ausgestaltet ist, daß zwei V-förmige Bereiche ausgebildet werden, die sich zu einem insgesamt rautenförmigen Initialbereich ergänzen. Um die Kerbwirkung zu erhöhen, weisen die Spitzen der beiden V's in Richtung der Sollbruchlinien 3, 3a des Formteils 1. Neben einem vollständigen Durchtrennen der Dekorschicht 4 ist es häufig ausreichend, daß die Dekorschicht 4 im Initialbereich 5 lediglich geschwächt ist. Eine derartige Schwächung kann beispielsweise auch in einem rückseitigen Einschneiden der Dekorschicht 4 oder einem Vermindern der Dicke der Dekorschicht 4 mittels Schablonen-Schärfspalten oder unter Verwendung eines Lasers erfolgen. In dem so geschwächten Initialbereich 5 werden bei einer Airbagauslösung die auf die Dekorschicht 4 und den Initialbereich 5 einwirkenden Kräfte aufgrund der durch die Schwächung des Materials verursachten Kerbwirkung zu einer Spannungsüberhöhung im Kerbgrund führen. Durch diese Spannungsüberhöhung wird im Kerbgrund die Rißeinleitung erfolgen, wobei der Riß nach erfolgter Rißeinleitung auch durch die ungeschwächten Bereiche der Dekorschicht 4 fortschreitet.

Wie in den Figuren 1 und 2 dargestellt, weist auch das Formteil 1 einen Initialbereich 2 auf, in dem bei einer Airbagauslösung die Rißeinleitung zum Durchtrennen der Sollbruchlinien 3a des Formteils 1 erfolgt. Die Schwächung des Formteils 1 im Initialbereich 2 verursacht bei einer Airbagauslösung eine Spannungsüberhöhung im Kerbgrund des Initialbereichs. Aufgrund dieser Spannungsüberhöhung im Kerbgrund erfolgt in diesem exakt definierten, örtlich begrenzten Initialbereich 2 die Rißeinleitung. Durch die bei einer Airbagauslösung weiter auf das Formteil 1 einwirkenden Kräfte schreitet der Riß entlang der Sollbruchlinien 3a und 3 fort. Die Einkerbungen bzw. Schwächungen des Formteils 1 entlang der Sollbruchlinien 3 und 3a verursachen entlang dieser Sollbruchlinien ebenfalls eine Spannungsüberhöhung. Dadurch wird erreicht, daß der Riß entlang dieser exakt definierten, vorbestimmten Sollbruchlinien 3 und 3a fortschreitet.

Aus den Figuren 2 und 3 wird ersichtlich, daß die Sollbruchlinien 3 und 3a des Formteils 1 so angebracht sind, daß lediglich die der Dekorschicht 4 abgewandte Seite des Formteils 1 eingekerbt ist. Auf diese Weise wird erreicht, daß die Sollbruchlinien 3 und 3a nach außen unsichtbar bleiben, was den Gestaltungsfreiraum für Design und Oberflächenbeschaffenheit erhöht.

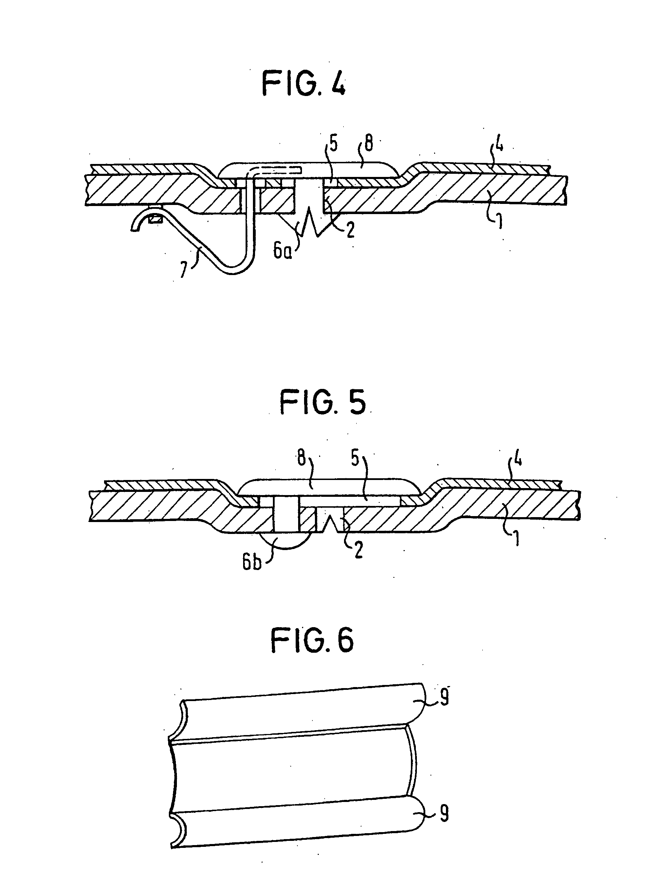

In Fig. 1 ist der Initialbereich 2 des Formteils 1 als ein runder Durchbruch ausgebildet. Diese Ausgestaltung in Form eines Durchbruchs hat den Vorteil, daß der Durchbruch neben dem Einleiten der Rißbildung gleichzeitig auch zur Befestigung eines Sichteinsatzteils 8 auf dem Formteil 1 dienen kann. Eine nicht kreisförmige Kontur des Durchbruchs kann hierbei zusätzlich als Verdrehsicherung für das Sichteinsatzteil dienen. In Fig. 4 ist ein Sichteinsatzteil 8 über einen Clip 6a an dem Formteil 1 befestigt. Um bei einer Airbagauslösung ein unkontrolliertes Abbrechen oder Ausknüpfen des Sichteinsatzteils 8 von dem Formteil 1 zu verhindern, wurde ein Fangelement 7 in das Sichteinsatzteil 8 integriert, so daß das Verletzungsrisiko der Fahrzeuginsassen gemindert wird. Das Fangelement 7 kann dabei beispielsweise ein reißfester Faden oder Draht sein, der in das Sichteinsatzteil 8 eingegossen oder auf eine andere Weise an dem Sichteinsatzteil 8 befestigt ist. Da aufgrund der sehr hohen Beschleunigungskrafte, die bei einer Airbagauslösung auf das Sichteinsatzteil 8 einwirken, das Sichteinsatzteil 8 nicht nur von dem Formteil 1 wegbrechen kann, sondern auch in mehrere teilweise scharfkantige Bruchstücke zerbersten kann, läßt sich das Fangelement 7 auch als Gewebe oder Folie in das Sichteinsatzteil 8 integrieren, so daß nicht nur ein unkontrolliertes Loslösen des Sichteinsatzteils 8 vom Formteil 1 verhindert wird, sondern auch kleinere Bruchstücke daran gehindert werden, unkontrolliert in den Fahrgastraum einzudringen. Das Fangelement 7 kann dabei entweder fest mit dem Formteil 1 durch Kleben oder Schweißen verbunden sein oder nachträglich an dem Formteil 1 anbringbar sein. Vorzugsweise ist das Sichteinsatzteil 8 als ein Emblem oder ein Schriftzug ausgebildet, der entweder Hinweise auf die Fahrzeugmarke oder auf den unter der Abdeckung vorhandenen Airbag gibt.

Wie in Fig. 4 gezeigt, ist es möglich, den Initialbereich 5 der Dekorschicht 4 und den Initialbereich 2 des Formteils 1 vollständig unter dem Sichteinsatzteil 8 zu verbergen. Auf diese Weise können die Initialbereiche 2 und 5 so ausgestaltet werden, daß eine optimale Rißeinleitung erfolgt, ohne das äußere Design der Airbagabdeckung zu beeinträchtigen, da das Sichteinsatzteil 8 die Initialbereiche 2 und 5 überdeckt.

In den Figuren 4 und 5 sind zwei unterschiedliche Befestigungsarten für Sichteinsatzteile 8 an Formteilen 1 dargestellt. Fig. 4 zeigt eine Befestigung mit einem Clip 6a, während in Fig. 5 eine Befestigung mit einem Niet 6b gezeigt ist. Der Clip 6a und der Niet 6b können dabei entweder in dem Initialbereich 2 des Formteils 1 angeordnet sein, falls dieser, wie hier dargestellt, als ein Durchbruch ausgebildet ist, oder, falls dies aus Design- oder Konstruktionsgründen erstrebenswerter ist, außerhalb des Initialbereichs 2 des Formteils 1 angeordnet werden. Bei der Ausführung mit einem Befestigungselement, z.B. Clip, im als Durchbruch ausgebildeten Initialbereich der Formteile kann beim Aufreißen der Sollbruchlinien und nachfolgendem Öffnen der Klappen gezielt ein "Ausknüpfen" der Sichteinsatzteil-Befestigung verursacht werden, wenn ein Fangelement das Loslösen und Eindringen des Sichteinsatzteils in den für die Insassen verletzungsrelevanten Bereich verhindert. Je nach Größe und Ausgestaltung des Sichteinsatzteils 8 kann es auch erforderlich sein, dieses mit mehreren Befestigungselementen, wie z.B. Clips 6a oder Nieten 6b an dem Formteil 1 zu befestigen. Das Sichteinsatzteil 8 kann auch durch Ultraschallschweißen, Kleben oder andere geeignete Verfahren an dem Formteil 1 befestigt werden.

Die Sollbruchlinien 3 und 3a am Formteil 1 sind vorzugsweise, wie in Fig.1 dargestellt, H-förmig ausgebildet. Bei einer Airbagauslösung werden die Sollbruchlinien 3 und 3a des Formteils 1 und die Dekorschicht 4 durchtrennt. Auf diese Weise bilden sich zwei in Fig. 6 dargestellte Klappen 9, die aufschwenken, so daß sich der Luftsack entfalten und mit dem vom Gasgenerator zur Verfügung gestellten Gas füllen kann.

## Patentansprüche

1. Airbagabdeckung mit
- einem Formteil (1), das Sollbruchlinien (3, 3a) aufweist, die so angeordnet sind, dass bei einer Airbagauslösung mindestens eine sich öffnende Klappe (9) gebildet wird, und das zumindest einen örtlich begrenzten Initialbereich (2) umfasst, in dem bei einer Airbagauslösung die Risseinleitung zum Durchtrennen der Sollbruchlinien (3) des Formteils (1) erfolgt; und
- mit einer auf dem Formteil (1) aufgebrachten Dekorschicht (4), die zumindest einen örtlich begrenzten Initialbereich (5) besitzt, in dem bei einer Airbagauslösung die Risseinleitung zum Durchtrennen der Dekorschicht (4) entlang der Sollbruchlinien (3, 3a) des Formteils (1) erfolgt und der örtlich mit dem Initialbereich (2) des Formteils(1) zusammenfällt, wobei der Initialbereich (5) der Dekorschicht (4) unter einem Sichteinsatzteil (8) verdeckt angeordnet ist,
**dadurch gekennzeichnet, dass** das Sichteinsatzteil (8) an dem Formteil (1) befestigt ist und daß der Initialbereich (2) des Formteils (1) als Durchbruch (2) ausgebildet ist.

2. Airbagabdeckung nach Anspruch 1, **dadurch gekennzeichnet, daß** die Anordnung der Sollbruchlinien (3, 3a) "H"-förmig ist und das Sichteinsatzteil (8) dabei zumindest einen Teil der querverlaufenden Sollbruchlinie (3a) verdeckt.

3. Airbagabdeckung nach Anspruch 1, **dadurch gekennzeichnet, daß**
- die Anordnung der Sollbruchlinien (3, 3a) "X"-förmig ist,
- das Sichteinsatzteil (8) im Kreuzungspunkt der Sollbruchlinien angeordnet ist, und
- in der Dekorschicht (4) ein Initialbereich (2) vorhanden ist, der unter dem Sichteinsatzteil (8) im Kreuzungspunkt der Sollbruchlinien liegt.

4. Airbagabdeckung nach Anspruch 1 oder 3, **dadurch gekennzeichnet, daß** der Initialbereich (5) der Dekorschicht (4) durch ein Vermindern der Dicke, wie durch ein Einschneiden oder Materialabtragen, gebildet ist.

5. Airbagabdeckung nach Ansprüche 1 oder 3, **dadurch gekennzeichnet, daß** der Initialbereich (5) der Dekorschicht (4) durch ein örtlich begrenztes, vollständiges Durchtrennen, beispielsweise durch einen Durchbruch (5), gebildet ist.

6. Airbagabdeckung nach Anspruch 5, **dadurch gekennzeichnet, daß** die Kontur des Durchbruchs (5) des Initialbereichs der Dekorschicht (4) spitz zulaufende Abschnitte zur gezielten Rißeinleitung aufweist.

7. Airbagabdeckung nach Anspruch 1 oder 3, **dadurch gekennzeichnet, daß** das Sichteinsatzteil (8) ein Emblem oder ein Schriftzug ist.

8. Airbagabdeckung nach Anspruch 1 oder 3, **dadurch gekennzeichnet, daß** an dem Sichteinsatzteil (8) ein Fangelement (7) reißfest befestigt und mit dem Formteil (1) verbunden ist, um bei einer Auslösung des Airbags ein unkontrolliertes Loslösen des Sichteinsatzteils (8) von dem Formteil (1) zu verhindern.

9. Airbagabdeckung nach Anspruch 1 oder 3, **dadurch gekennzeichnet, daß** das Sichteinsatzteil (8) durch Kleben oder durch Ultraschall-Schweißen an dem Formteil (1) befestigt ist.

10. Airbagabdeckung nach Anspruch 1 oder 3, **dadurch gekennzeichnet, daß** das Sichteinsatzteil (8) mit zumindest einem Befestigungselement, wie Clips (6a) oder Niet (6b), an dem Formteil (1) befestigt ist.

11. Airbagabdeckung nach einem der vorangegangenen Ansprüche, **dadurch gekennzeichnet, daß** die Dekorschicht (4) aus Leder, einem Lederaustauschmittel, wie Kunstleder, Alcantara, Lorica, oder aus einer Kunststoffolie, wie PUR, PVC, ASA, ABS besteht.

## Claims

1. Airbag cover with
- a moulded part (1) which has predetermined fracture lines (3, 3a), which are arranged in such a way that when the airbag is released at least one opening flap (9) is formed, and which comprises at least one initial region (2), limited in location, in which initiation of the tear for cutting through the predetermined fracture lines (3) of the moulded part (1) takes place when the airbag is released and
- with a decorative layer (4) applied to the moulded part (1) which has at least one initial region (5), limited in location, in which initiation of the tear for cutting through the decorative layer (4) takes place when the airbag is released along the predetermined fracture lines (3, 3a) of the moulded part (1) and which coincides in location with the initial region (2) of the moulded part (1), wherein the initial region (5) of the decorative layer (4) is hidden below a visual insert part (8), **characterised in that** the visual insert part (8) is fastened to the moulded part (1) and the initial region (2) of the moulded part (1) is constructed as an opening (2).

2. Airbag cover according to claim 1, **characterised in that** the arrangement of the predetermined fracture lines (3, 3a) is H-shaped and the visual insert part (8) therein hides at least part of crosswise-running predetermined fracture line (3a).

3. Airbag cover according to claim 1, **characterised in that**
- the arrangement of the predetermined fracture lines (3, 3a) is X-shaped
- the visual insert part (8) is arranged at the crossing point of the predetermined fracture lines and
- in the decorative layer (4) there is an initial region (2) which is located below the visual insert part (8) at the crossing point of the predetermined fracture lines.

4. Airbag cover according to claim 1 or 3, **characterised in that** the initial region (5) of the decorative layer (4) is formed by reducing the thickness, such as by cutting in or removing material.

5. Airbag cover according to claim 1 or 3, **characterised in that** the initial region (5) of the decorative layer (4) is formed by complete cutting through, limited in location, for example by an opening (5).

6. Airbag cover according to claim 5, **characterised in that** the contour of the opening (5) in the initial region of the decorative layer (4) has sections running into a point for targeted tear initiation.

7. Airbag cover according to claim 1 or 3, **characterised in that** the visual insert part (8) is an emblem or lettering.

8. Airbag cover according to claim 1 or 3, **characterised in that** fastened as resistant to tearing to the visual insert part (8) is a catching element (7), connected to the moulded part (1), in order to prevent uncontrolled detaching of the visual insert part (8) from the moulded part (1) when the airbag is released.

9. Airbag cover according to claim 1 or 3, **characterised in that** the visual insert part (8) is fastened to the moulded part (1) by gluing or by ultrasound welding.

10. Airbag cover according to claim 1 or 3, **characterised in that** the visual insert part (8) is fastened to the moulded part (1) by at least one fastening element, such as a clip (6a) or rivet (6b).

11. Airbag cover according to one of the preceding claims, **characterised in that** the decorative layer (4) consists of leather, a leather substitute means, such as synthetic leather, Alcantara, Lorica, or a plastics material foil, such as PUR, PVC, ASA or ABS.

## Revendications

1. Couvercle pour sac gonflable de sécurité comportant
- une pièce moulée (1), présentant des lignes destinées à la rupture (3, 3a) disposées de manière que, en cas de déclenchement du sac gonflable, au moins un volet (96) s'ouvrant soit formé et comprenant au moins une zone initiale (2), délimitée localement, dans laquelle, en cas de déclenchement du sac gonflable de sécurité, l'induction d'une fissure, devant produire la séparation des lignes destinées à la rupture (3) de la pièce moulée (1), s'effectue; et
- avec une couche de décoration (4) appliquée sur la pièce moulée (1), qui comporte au moins une zone initiale (5) délimitée localement, dans laquelle, en cas de déclenchement d'un sac gonflable, l'induction de la fissure, devant produire la séparation de la couche de décoration (4), se fait le long des lignes destinées à la rupture (3, 3a) de la pièce moulée (1) et qui coïncide localement avec la zone initiale (2) de la pièce moulée (1), où la zone initiale (5) de la couche de décoration (4) est disposée cachée sous une pièce d'insert visuel (8),
**caractérisé en ce que** la pièce d'insert visuel (8) est fixée sur la pièce moulée (1) et **en ce que** la zone initiale (2) de la pièce moulée (1) est réalisée sous la forme de traversée (2).

2. Couvercle pour sac gonflable de sécurité selon la revendication 1, **caractérisé en ce que** l'agencement des lignes destinées à la rupture (3, 3a) est en forme de "H" et la partie d'insert visuel (8) couvre alors au moins une partie de la ligne destinée à la rupture (3a) s'étendant transversalement.

3. Couvercle pour sac gonflable de sécurité selon la revendication 1, **caractérisé en ce que**
- l'agencement des lignes destinées à la rupture (3, 3a) est en forme de "X",
- la pièce d'insert visuel (8) est disposée au point de croisement des lignes destinées à la rupture, et
- dans la couche de décoration (4), est prévue une zone initiale (2), située sous la partie d'insert visuel (8), au point de croisement des lignes destinées à la rupture.

4. Couvercle pour sac gonflable de sécurité selon la revendication 1 ou 3, **caractérisé en ce que** la zone initiale (5) de la couche de décoration (4) est formée par une diminution de l'épaisseur, tel qu'obtenu par une entaille ou un enlèvement de matière.

5. Couvercle pour sac gonflable de sécurité selon la revendication 1 ou 3, **caractérisé en ce que** la zone initiale (5) de la couche de décoration (4) est formée par une séparation complète, limitée localement, par exemple par une traversée (5).

6. Couvercle pour sac gonflable de sécurité selon la revendication 5, **caractérisé en ce que** le contour de la traversée (5) de la zone initiale de la couche de décoration (4) présente des tronçons allant en évoluant en formant un angle aigu, pour induire à dessein la formation d'une fissure.

7. Couvercle pour sac gonflable de sécurité selon la revendication 1 ou 3, **caractérisé en ce que** la pièce d'insert visuel (8) est un emblème ou une griffe stylique.

8. Couvercle pour sac gonflable de sécurité selon la revendication 1 à 3, **caractérisé en ce qu'**un élément d'emprisonnement (7) est fixé à la pièce d'insert visuel (8), de façon ferme quant au risque de déchirement, et est relié à la pièce moulée (1), pour, en cas de déclenchement du sac gonflable de sécurité, empêcher tout détachement incontrôlé de la pièce d'insert visuel (8) depuis la pièce moulée (1).

9. Couvercle pour sac gonflable de sécurité selon la revendication 1 ou 3, **caractérisé en ce que** la pièce d'insert visuel (8) est fixée sur la pièce moulée (1) par collage ou par soudage aux ultrasons.

10. Couvercle pour sac gonflable de sécurité selon la revendication 1 ou 3, **caractérisé en ce que** la pièce d'insert visuel (8) est fixée sur la pièce moulée (1) à l'aide d'au moins un élément de fixation, tel qu'une attache (6a) ou un rivet (6b).

11. Couvercle pour sac gonflable de sécurité selon l'une des revendications précédentes, **caractérisé en ce que** la couche de décoration (4) est formée en cuir, en matériau de substitution du cuir, tel qu'un cuir artificiel, de l'Alcantara, du Lorica, ou bien d'une feuille en matière synthétique tel que du PUR, PVC, ASA, ABS.
